# EUROPEAN PATENT APPLICATION

(11) **EP 4 201 577 A1**
(43) Date of publication of application: **28.06.2023**
(21) Application number: 20950248.3
(22) Date of filing: 18.08.2020
(51) Int. Cl.: B23K 26/08, B23K 26/082

(54) **OPTICAL DEVICE AND PROCESSING DEVICE**

(71) Applicant: NIKON CORPORATION, Minato-ku Tokyo 108-6290 (JP)
(72) Inventor: NAGASAKA, Hiroyuki, Tokyo 108-6290 (JP); KAWABE, Yoshio, Tokyo 108-6290 (JP)
(74) Representative: Hoffmann Eitle
(86) International application number: PCT/JP2020/031160
(87) International publication number: WO 2022/038682

(57) **Abstract**

An optical apparatus includes: a first optical system configured to guide light from a first area on a first plane to a second plane, the second plane being a pupil plane of the first optical system relative to the first plane; a second optical system disposed between the second plane and a third plane, the second plane being a pupil plane of the second optical system relative to the third plane; a first reflective member that is disposed on a first optical path at an entrance side of the first optical system and that has a first reflective surface that is swingable; and a second reflective member that is disposed on a second optical path between the first optical system and the second optical system and that has a second reflective surface that is swingable.

## Description

### Technical Field

The present invention relates to an optical apparatus and a processing apparatus.

### Background Art

In a processing apparatus configured to process a processing target object by irradiating the processing target object such as a metal plate with light, an apparatus including a beam positioning system at a position that is away toward a light source side from a convergence optical system, the beam positioning system is configured to adjust an entrance position and an entrance angle of the light onto the processing target object, the convergence optical system is configured to converge laser light on the processing target object (a Patent Document 1).

### Citation List

### Patent Literature

Patent Literature 1: WO2016/206943A

### Summary of Invention

According to a first aspect, an optical apparatus includes: a first optical system configured to guide light from a first area on a first plane to a second plane, the second plane being a pupil plane of the first optical system relative to the first plane; a second optical system disposed between the second plane and a third plane, the second plane being a pupil plane of the second optical system relative to the third plane; a first reflective member that is disposed on a first optical path at an entrance side of the first optical system and that has a first reflective surface that is swingable; and a second reflective member that is disposed on a second optical path between the first optical system and the second optical system and that has a second reflective surface that is swingable.

According to a second aspect, an optical apparatus includes: a first reflective member having a first reflective surface that is swingable, light from a light source entering the first reflective member; an intermediate optical system which light from the first reflective member enters; a second reflective member having a second reflective surface that is swingable, light from the intermediate optical system entering the second reflective member; and an objective optical system configured to condenses light from the second reflective member on a workpiece, an angle of light, which propagates from the objective optical system to the workpiece, relative to the workpiece being changed by swinging the first reflective surface, an irradiation position of the light from the objective optical system, with which the workpiece is irradiated, being changed by swinging the second reflective surface.

According to a third aspect, an optical apparatus configured to make light from a light source enter an objective optical system, include: a first reflective member having a first reflective surface that is swingable; an intermediate optical system which light from the first reflective member enters; and a second reflective member having a second reflective surface that is swingable, light from the intermediate optical system entering the second reflective member, the intermediate optical system is configured to guide light from a first area on a first plane to a second plane, the second plane being a pupil plane of the intermediate optical system relative to the first plane, the objective optical system is disposed between the second plane and a third plane, the second plane being a pupil plane of the objective optical system relative to the third plane.

According to a fourth aspect, a processing apparatus is a processing apparatus configured to process a workpiece by light from a light source, wherein the processing apparatus includes the optical system the first or second aspect, the light from the light source enters the optical system.

### Brief Description of Drawings

[FIG. 1] A schematic diagram illustrating a configuration of an optical apparatus and a processing apparatus in a first example embodiment.
[FIG. 2] A schematic diagram illustrating functions of a first reflective member and a second reflective member.
[FIG. 3] An enlarged diagram illustrating a part of the optical system in a vicinity of the first reflective member.
[FIG. 4] An enlarged diagram illustrating a part of the optical system in a vicinity of the second reflective member.
[FIG. 5] A schematic diagram illustrating a configuration of an optical apparatus in a second example embodiment.
[FIG. 6] A schematic diagram illustrating a configuration of a processing apparatus in a third example embodiment.

### Description of Example embodiments

In this specification, a term "pupil plane" means a plane that satisfies a requirement A and a requirement described below.

Requirement A: an emitting angle of light beam from an object plane is determined depending on a position of the light beam passing through the plane. Or, an incident angle of the light beam to an image plane is determined depending on the position of the light beam passing through the plane.

Requirement B: a position of an intersection of light beam with an object plane is determined depending on an angle of the light beam passing through the plane relative to an optical axis. Or, the position of the intersection of the light beam with the object plane is determined depending on the angle of the light beam passing through the plane relative to the optical axis.

In this specification, "optically conjugate" means that one plane and another plane are in an image-forming relationship through an optical system.

In this specification, "image-forming relationship" means a relationship in which light emitted from any one point in one area is condensed through an optical system in a range whose center is at one point in another area and whose size is based on a resolution of the optical system.

A X direction, a Y direction, and a Z direction indicated by arrows in each drawing described below are perpendicular to one another, and each of the X direction, the Y direction, and the Z direction indicates the same direction in each drawing.

In the below-described description, directions indicated by the arrows are referred to as a +X direction, a +Y direction, and a +Z direction, respectively.

Moreover, a position in the X direction is referred to as a X position, a position in the Y direction is referred to as a Y position, and a position in the Z direction is referred to as a Z position.

Moreover, a XZ direction indicated by an arrow in some of the drawings described below is an intermediate direction between the X direction and the Z direction described above, namely, indicates a direction that is perpendicular to the Y direction and that is away from each of the X direction and the Z direction by 45 degree. In the below-described description, a direction indicated by the arrow in the XZ direction is referred to as a +XZ direction.

### (Optical Apparatus and Processing Apparatus in First Example Embodiment)

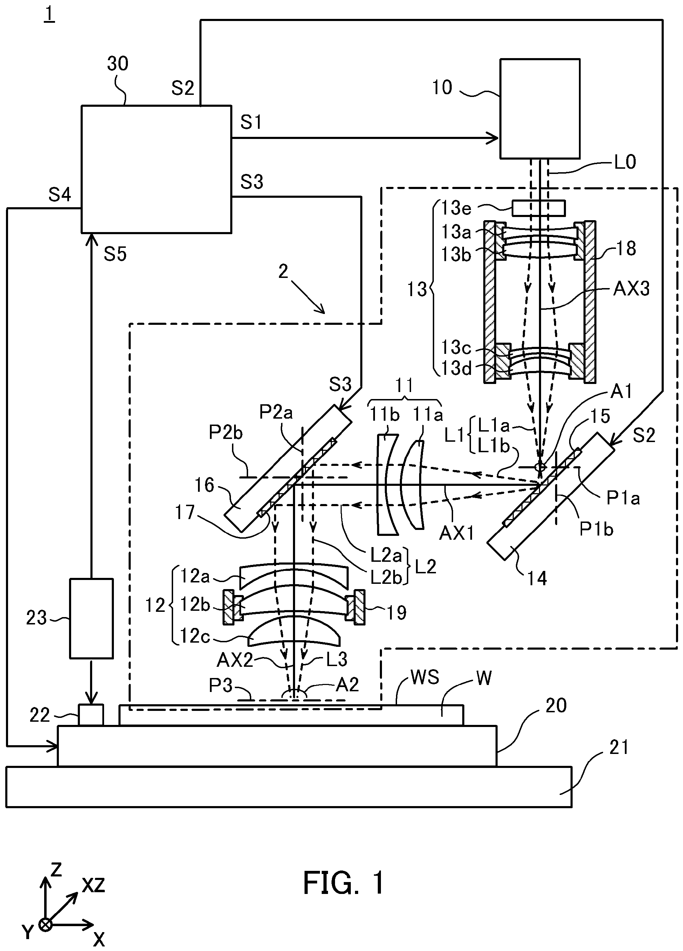

FIG. 1 illustrates a schematic diagram illustrating a configuration of a processing apparatus 1 in a first example embodiment. The processing apparatus 1 in the first embodiment includes an optical apparatus 2 in the first embodiment that is illustrated in FIG. 1 by surrounding it by a double-dotted line. The optical apparatus 2 in the first embodiment is an optical apparatus including a first optical system 11, a second optical system 12, a third optical system 13, a first reflective member 14, a second reflective member 16, and so on.

The processing apparatus 1 in the first example embodiment is an apparatus that is configured to irradiate a surface (an irradiation target surface WS) of a workpiece W, which is a processing target object, with light supplied from a light source 10 by the optical apparatus 2.

Note that the first optical system 11 may be referred to as an intermediate optical system. Moreover, the second optical system 12 may be referred to as an objective optical system.

The light supplied from the light source 10 such as a laser propagates toward the -Z direction along an optical path L0 as an example, and enters a third optical system 13 that includes four lenses 13a to 13d and a shaping optical system 13e as an example. The light is converged by the third optical system 13, propagates on a first incident optical path L1a that is generally along an optical axis AX3 of the third optical system 13, and is condensed on a first area A1 on a first plane P1a.

The third optical system 13 is a zoom optical system as an example, and a focal length of the third optical system 11 as a whole is changed by changing positions of front group lenses (the lenses 13a and 13b) and rear group lenses (the lenses 13c and 13d) in the Z direction (in a direction of the optical axis AX3). A third barrel 18, which holds each of the lenses 13a to 13d of the third optical system 13, moves each of the front group lenses 13a and 13b and the rear group lenses 13c and 13d in the Z direction. This changes the focal length of the third optical system 13 while keeping a state in which the first incident optical path L1a is condensed on the first area A1 on the first plane P1a.

A diameter of the light, which enters the third optical system 13, in the cross-section of an optical path L0 is constant regardless of the change of the focal length of the first optical system 13, and thus, a numerical aperture (NA) of the first incident optical path L1a, which is condensed onto the first area A1 on the first plane P1a, changes as the focal length of the third optical system 13 changes. Accordingly, a diameter of the light condensed on the first plane P1a, namely, a diameter of the first area A1, changes.

The shaping optical system 13e included in the third optical system 13 will be described below.

A first reflective member 14 having a first reflective surface 15 is disposed in a vicinity of the first area A1 on the first plane P1a on the first incident optical path L1a. In detail, the first reflective member 14 is disposed so that the first area A1, which is an area on which the optical path L1a is condensed, is generally coincident with the first reflective surface 15. An orientation of the first reflective surface 15 is set so that it is generally parallel to the Y direction and the XZ direction as an example, namely, so that each of the Y direction and the XZ direction is generally coincident with an in-plane direction of the first reflective surface 15. However, the orientation of the first reflective surface 15 is held so as to swingable relative to the first reflective member 14 fixedly disposed, namely, so as to rotatable within a predetermined angular range.

As an example, the first reflective surface 15 is held so as to be swingable around each of a rotational axis parallel to the Y direction and a rotational axis parallel to the XZ direction within a range of about 10 degree relative to a reference angle position at which the orientation of the first reflective surface 15 is parallel to the Y direction and the XZ direction. Therefore, the first reflective surface 15 reflects incident light, which propagates generally in the -Z direction through the first incident optical path L1a, toward a direction which is away from the -X direction toward the ±Y direction and the ±Z direction within a range of about 20 degree, for example, centered on the -X direction, depending on its orientation.

The first reflective member 14 is a MEMS (Micro-Electro-Mechanical Systems) mirror member that is swingable around two rotational axes, as an example. The first reflective member 14 is a member that is fixedly disposed. A reflective element member that is rotatable around the two axes within a predetermined angular range is disposed on one surface of the first reflective member 14 by the MEMS, and a surface of the reflective element member that faces the optical path is usable as the first reflective surface 15. The light emitted from the third optical system 13 is reflected according to the angle of the first reflective surface 15 and emitted to the first optical system 11.

An orientation of the reflective element member, namely, the orientation of the first reflective surface 15 is set to be a predetermined orientation by externally applying a predetermined voltage or applying a predetermined current. The predetermined voltage or the predetermined current is applied to the first reflective member 14 as a control signal S2 from a control unit 30. The direction of the two rotational axes around which the first reflective surface 15 is rotated within the predetermined angular range is not limited to the directions parallel to the Y and XZ directions described above, but may be any direction as long as they intersect each other.

A virtual image of the first plane P1a formed by the reflection by the first reflective surface 15 is hereinafter referred to as a first virtual image plane P1b. The first virtual image plane P1b is optically equivalent to the first plane P1a.

The first reflective surface 15 may be a surface of a metallic plate with high reflectivity, or a surface of a non-metallic plate such as silicon on which a metallic film or dielectric multilayer film with high reflectivity is formed.

The light reflected by the first reflective surface 15 enters the first optical system 11 through a first reflection optical path L1b.

A combination of or each of the first incident optical path L1a and the first reflection optical path L1b are referred to as a first optical path L1. The first optical path L1 is located on an entrance side of the first optical system 11, namely, at a position that is away from the first optical system 11 toward the light source 10, and is an optical path through which the light from the light source 10 passes. The first reflective member 14 having the first reflective surface 15 is disposed on the first optical path L1.

The first optical system 11 is an optical system including, as an example, two lenses 11a and 11b arranged along an optical axis AX1 of the first optical system 11. Light emitted from the first optical system 11 is guided to a second plane P2a through a second incident optical path L2a. It can be said that the first plane P1a and the first virtual image plane P1b are object planes on which the first area A1 that is a light-condensed area is formed. The first optical system 11 is an optical system in which the second plane P2a the a pupil plane thereof relative to the first plane P1a and the first virtual image plane P1b that are the object planes.

A second reflective member 16 having a second reflective surface 17 is disposed in a vicinity of the second plane P2a. A configuration of the second reflective member 16 having the second reflective surface 17 is the same as a configuration of the first reflective member 14 having the first reflective surface 15 described above.

A virtual image of the second plane P2a formed by the reflection by the second reflective surface 17 is hereinafter referred to as a second virtual image plane P2b. The second virtual image plane P2b is optically equivalent to the second plane P2a.

An orientation of the second reflective surface 17 is set so that it is generally parallel to the Y direction and the XZ direction as an example, namely, so that each of the Y direction and the XZ direction is generally coincident with an in-plane direction of the second reflective surface 17. However, the orientation of the second reflective surface 17 is held so as to swingable relative to the second reflective member 16 fixedly disposed, namely, so as to rotatable within a predetermined angular range.

A predetermined voltage or a predetermined current that controls the orientation of the second reflective surface 17 is applied to the second reflective member 16 as a control signal S3 from the control unit 30.

As an example, the second reflective surface 17 is held so as to be swingable around each of a rotational axis parallel to the Y direction and a rotational axis parallel to the XZ direction within a range of about 10 degree relative to a reference angle position at which the orientation of the second reflective surface 17 is parallel to the Y direction and the XZ direction. Therefore, the second reflective surface 17 reflects incident light, which propagates generally in the -X direction through the second incident optical path L2a, toward a direction which is away from the -Z direction toward the ±X direction and the ±Y direction within a range of about 20 degree, for example, centered on the -Z direction, depending on its orientation.

The light reflected by the second reflective surface 17 enters the second optical system 12 through a second reflection optical path L2b.

A combination of or each of the second incident optical path L2a and the second reflection optical path L2b is referred to as a second optical path L2. The second optical path L2 is between the first optical system 11 and the second optical system 12 and is an optical path through which the light from the light source 10 passes. The second reflective member 16 having the second reflective surface 17 is disposed on the second optical path L2.

The second optical system 12 is an optical system including, as an example, three lenses 12a to 12c arranged along an optical axis AX2 of the second optical system 12. Light emitted from the second optical system 11 is condensed on a second area A2 on a third plane P3 through the third optical path L3. The third plane P3 is optically conjugate to the above-described first plane P1a as the object plane and is an image plane for the first plane P1a.

Namely, the first optical system 11 and the second optical system 12 form an image of the first area A1 on the first plane P1a in the second area A2 on the third plane P3.

Moreover, the second optical system 12 is an optical system in which the second plane P2a and the second virtual image plane P2b are pupil planes thereof relative to the third plane P3 that is the image plane.

Note that the first optical system 11 and the second optical system 12 are also held by a first barrel and a second barrel, respectively, in the same way that the third optical system 13 is held by the third barrel 18 described above, however, the first barrel and the second barrel are not illustrated.

A part of the lenses included in the second optical system 12, as an example, the lens 12b, is held by the second lens barrel so as to be movable in a direction along the optical axis AX2 through a focal position change member 19.

By the focal position change member 19 moving the lens 12b in the direction along the optical axis AX2, the third plane P3 on which the second area A2 is formed can be displaced in the direction along the optical axis AX2 to adjust a focal position (a position of the third plane P3) of an optical system including the first optical system 11 and the second optical system 12.

Note that the lens to be moved by the focal position change member 19 is not limited to the lens 12b, but may be the lens 12a or the lens 12c. The focal position change member 19 may move a plurality of lenses included in the second optical system 12 or the entire second optical system 12. Alternatively, the focal position change member 19 may move some or all lenses or mirrors included in the first optical system 11.

When the third plane P3 moves along the optical axis AX2 due to a change of the orientation (the angle) of the first reflective surface 15 or the second reflective surface 17 as described below, the focal position change member 19 may be driven to correct the position of the third plane P3.

The processing apparatus 1 has a sample stage 20 that is movable in the X direction and the Y direction on a guide 21, and the workpiece W that is the processing target object such as a metal plate is placed on the sample stage 20 so that the irradiation target surface WS that is a surface of the sample stage at the +Z side is generally coincident with the third plane P3. The sample stage 20 may be movable in the Z direction relative to the guide 21. The sample stage 20 may be rotatable (tiltable) within a predetermined angular range around a rotational axis along the X direction and a rotational axis along the Y direction. A position of the sample stage 20 is measured by an optical encoder 23 as an example by using a position of a scale plate 22 disposed on the sample stage 20, and is transmitted to the control unit 30 as a position signal S5.

The control unit 30 transmits a control signal S4 to the sample stage 20 based on the position signal S5 from the encoder 23 to control the sample stage 20 to be at a predetermined position and controls the emission of the light source 10 by a control signal S1.

Moreover, as described above, the control unit 30 transmits the control signal S2 to the first reflective member 14 to control the orientation of the first reflective surface 15 and transmits the control signal S2 to the second reflective member 16 to control the orientation of the second reflective surface 17. Therefore, it can be said that the control unit 30 is included in the optical apparatus 2.

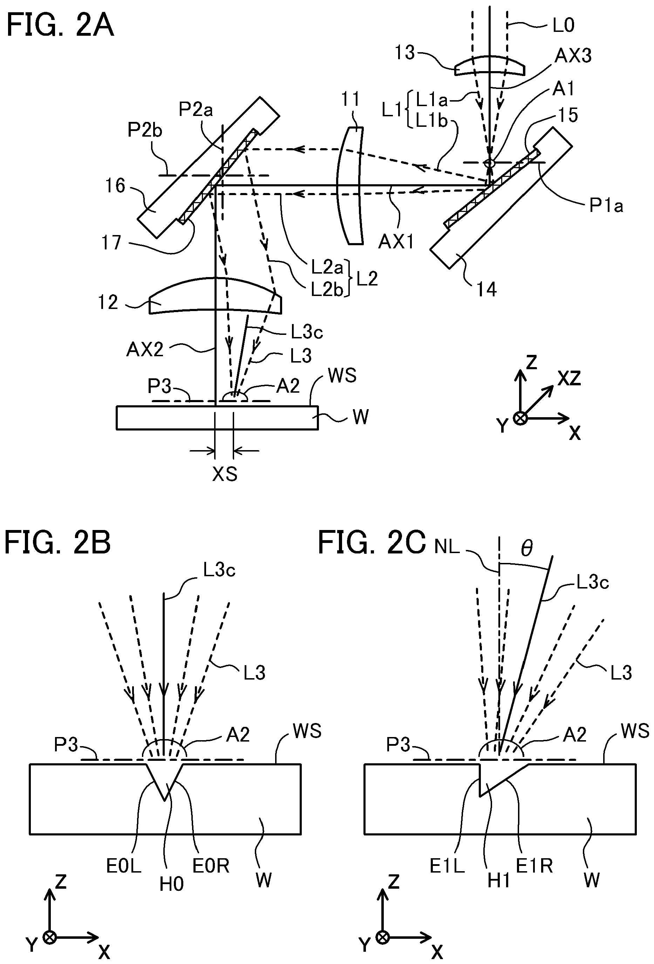

FIG. 2A is a diagram illustrating a part of the optical apparatus 2 and schematically illustrates functions of the first reflective member 14 and the second reflective member 16. In FIG. 2A, each of the first optical system 11, the second optical system 12, and the third optical system 13 is simply illustrated by a single lens.

By changing the orientation (the angle) of the first reflective surface 15 of the first reflective member 14, a propagating direction of the first reflection optical path L1b changes by twice of the change of the angle of the first reflective surface 15, and an incident angle of the third optical path L3 entering the second area A2 on the third plane P3 changes accordingly.

As illustrated in FIG. 1, when the orientation of the first reflective surface 15 corresponds to the reference angle position described above, the first reflection optical path L1b propagates in a direction centered in the -X direction. Principal ray L3c of the third optical path L3 almost vertically enters the third plane P3 on which the irradiation target surface WS of the workpiece W is disposed, as illustrated in FIG. 2B.

On the other hand, when the first reflective surface 15 is rotated around the rotational axis along the +Y direction from the reference angle position toward a clockwise direction by a predetermined angle, as illustrated in FIG. 2A, the propagating direction of the first reflection optical path L1b changes to a direction that is displaced from the direction centered in the -X direction toward the +Z direction. The Principal ray L3c of the third optical path L3 enters the third plane P3 from a direction inclined with respect to a normal line NL of the third plane P3 toward the +X direction by an angle θ, as illustrated in FIG. 2C.

Moreover, when the first reflective surface 15 is rotated around the rotational axis along the +Y direction from the reference angle position toward a counterclockwise direction by a predetermined angle, the propagating direction of the first reflection optical path L1b changes to a direction that is displaced from the direction centered in the -X direction toward the -Z direction. The principal ray L3c of the third optical path L3 enters the third plane P3 from a direction inclined with respect to the normal line NL of the third plane P3 toward the -X direction by an angle θ.

On the other hand, when the first reflective surface 15 is rotated around the rotational axis along the +XZ direction from the reference angle position toward a counterclockwise direction (or a clockwise direction) by a predetermined angle, the propagating direction of the first reflection optical path L1b changes to a direction that is displaced from the direction centered in the -X direction toward the +Y direction (or the -Y direction). The principal ray L3c of the third optical path L3 enters the third plane P3 from a direction inclined with respect to the normal line NL of the third plane P3 toward the +Y direction (or the -Y direction).

Changing the orientation of the first reflective surface 15 by a predetermined angle allows the principal ray L3c of the third optical path L3 enter the third plane P3 from a direction inclined with respect to the normal line NL of the third plane P3 toward any direction by a predetermined angle.

The change in the orientation (the angle) of the first reflective surface 15 is not limited to the change using the rotational axes around the +Y direction and the +XZ direction as the rotational axes, but may be the change using the rotational axes around any two directions.

As described above, the orientation (the angle) of the first reflective surface 15 is controlled by the control signal S2 from the control unit 30. Therefore, in other words, the control unit 30 controls the orientation of the first reflective surface 15 so as to change the direction (an incident direction relative to the third plane P3) of the third optical path L3 propagating from the second optical system 12 to the third plane P3.

The second reflective surface 17 of the second reflective member 16 is disposed in a vicinity of the second plane P2a and the second virtual image plane P2b each of which is the pupil plane of the first optical system 11 relative to the first plane P1a as the object plane and is also the pupil plane of the second optical system 12 relative to the third plane P3 as the object plane. Specifically, it is disposed on the second optical path L2 between the first optical system 11 and the second optical system 12.

Therefore, by changing the orientation (the angle) of the second reflective surface 17 of the second reflective member 16, a propagating direction of the second reflection optical path L2b changes by twice of the change of the angle of the second reflective surface 17, and a position of the second area A2 on the third plane P3, which is the image of the first area A1, changes accordingly. Moreover, even when the orientation of the second reflective surface 17 is changed, the change of the incident angle of the third optical path L3 relative to the third plane P3 is small.

As illustrated in FIG. 1, when the second reflective surface 17 is at the reference angle position described above, the second area A2 is formed on the optical axis AX2 of the second optical system AX2.

On the other hand, as illustrated in FIG. 2A, when the second reflective surface 17 is rotated around the rotational axis along the +Y direction from the reference angle position toward a counterclockwise direction by a predetermined angle, as illustrated in FIG. 2A, the propagating direction of the second reflection optical path L2b changes to a direction that is displaced from the direction centered in the -Z direction toward the +X direction. The second area A2 is formed at a position that is away from the optical axis AX2 of the second optical system AX2 toward the +X direction by a predetermined distance XS.

When the second reflective surface 17 is rotated around the rotational axis along the +Y direction from the reference angle position toward a clockwise direction by a predetermined angle, the propagating direction of the second reflection optical path L2b changes to a direction that is displaced from the direction centered in the -Z direction toward the -X direction. The second area A2 is formed at a position that is away from the optical axis AX2 of the second optical system AX2 toward the -X direction by a predetermined distance.

On the other hand, when the second reflective surface 17 is rotated around the rotational axis along the +XZ direction from the reference angle position toward a counterclockwise direction (or a clockwise direction) by a predetermined angle, the propagating direction of the second reflection optical path L2b changes to a direction that is displaced from the direction centered in the -Z direction toward the -Y direction (or the +Y direction). The second area A2 is formed at a position that is away from the optical axis AX2 of the second optical system AX2 toward the -Y direction (or the +Y direction) by a predetermined distance.

Therefore, changing the orientation of the second reflective surface 17 by a predetermined angle allows the second area A2 to be formed at any position in the XY plane.

The change in the orientation (the angle) of the second reflective surface 17 is not limited to the change using the rotational axes around the +Y direction and the +XZ direction as the rotational axes, but may be the change using the rotational axes around any two directions.

As described above, the orientation (the angle) of the first reflective surface 17 is controlled by the control signal S3 from the control unit 30. Therefore, in other words, the control unit 30 controls the orientation of the first reflective surface 17 so as to change the position of the third optical path L3 reaching the third plane P3 from the second optical system 12, namely, the position of the second area R2.

Since the first reflective surface 15 of the first reflective member 14 is disposed in the vicinity of the first area A1 on the first plane P1a that is optically conjugate to the third plane P3, the change of the position of the second area A2 on the third plane P3 is kept small even when the orientation of the first reflective surface 15 is changed. Therefore, by changing the orientation of the first reflective surface 15, the incident angle of the third optical path L3 entering the third plane P3 can be changed without significantly changing the position of the second area A2 on the third plane P3.

Moreover, since the second reflective surface 17 of the second reflective member 16 is disposed in the vicinity of the pupil plane relative to the first plane P1a and the third plane P3 as the object planes, the change of the incident angle of the third optical path L3 entering the third plane P3 is kept small even when the orientation of the second reflective surface 17 is changed. Therefore, by changing the orientation of the second reflective surface 17, the position of the second area A2 on the third plane P3 can be changed without significantly changing the incident angle of the third optical path L3 entering the third plane P3.

In the vicinity of the irradiation target surface WS of the workpiece W that has been irradiated with the light from the light source 10 condensed on the second area A2, a part of the workpiece W sublimates (or melts and vaporizes), and a hole H0 or H1 is formed (processed) as illustrated in FIG. 2B and FIG. 2C. Note that a groove may be formed (processed) in which the holes H0 or H1 are formed one-dimensionally or two-dimensionally in succession by irradiating the irradiation target surface WS with the light while changing the orientation of the second reflective surface 17 or moving the sample stage 20 in the XY plane direction. In the below described description, an example in which the holes H0 and H1 includes the groove will be described.

As illustrated in FIG. 2B, when the principal ray L3c of the third optical path L vertically enters the irradiation target surface WS, a part of the third optical path L is shielded by an edge in the hole H0 in the X direction or the Y direction and the amount of light decreases in the vicinity of the edge. As a result, an energy of the light is reduced and a sublimation speed of the workpiece W is slower in the vicinity of the edge of hole H0 than that in the vicinity of a center of hole H0. Therefore, as illustrated in FIG. 2B as an example, a shape of each of a left edge E0L and a right edge E0R in the X direction is not a shape that each of the left edge E0L and the right edge E0R is perpendicular to the irradiation target surface WS.

On the other hand, when the first reflective surface 15 is rotated around the rotational axis along the +Y direction by a predetermined angle as illustrated in FIG. 2(a), the principal ray L3c of the third optical path L3 enters the third plane P3 from the direction inclined with respect to the normal line NL of the third plane P3 toward the +X direction by a predetermined angle, as illustrated in FIG. 2C. As a result, the left edge E1L of the hole H1 formed in the workpiece W is irradiated with larger amount of light, compared to a case illustrated in FIG. 2B, and thus, the left edge E1L is perpendicular to the irradiation target surface WS.

In this case, the shape of the right edge E1R on the opposite side of the left edge E1L is not a shape that the right edge E1R is perpendicular to the irradiation target surface WS. However, for example, by irradiating the hole H1 with the principal ray L3c from the direction inclined with respect to the normal line NL toward the -X direction by a predetermined angle after forming hole H1 as described above, both left edge E1L and right edge E1R of hole H1 can be formed to be perpendicular to the irradiation target surface WS.

Processing the left edge E1L and the right edge E1R of hole H1 to be perpendicular to the irradiation target surface WS is one example. By emitting the light of the third optical path L3 whose principal ray L3c enters the third plane P3, namely, the irradiation target surface WS from a direction inclined toward any direction by an angle, the hole or the groove having any sidewall shape may be formed in the workpiece W. In this case, the irradiation of the workpiece W with the light to form the hole or the groove may be a single irradiation from a predetermined single incident direction or may be a plurality of irradiations from a plurality of incident direction that are different from each other.

The control unit 30 transmits the control signal S1 to the light source 10, the control signal S2 to the first reflective member 14, the control signal S3 to the second reflective member 16, and the control signal S4 to the sample stage 20, respectively, and control them to form the hole or the groove of any side shape at any position of the workpiece W.

### (Modified Example of Position at which First Reflective Member is disposed)

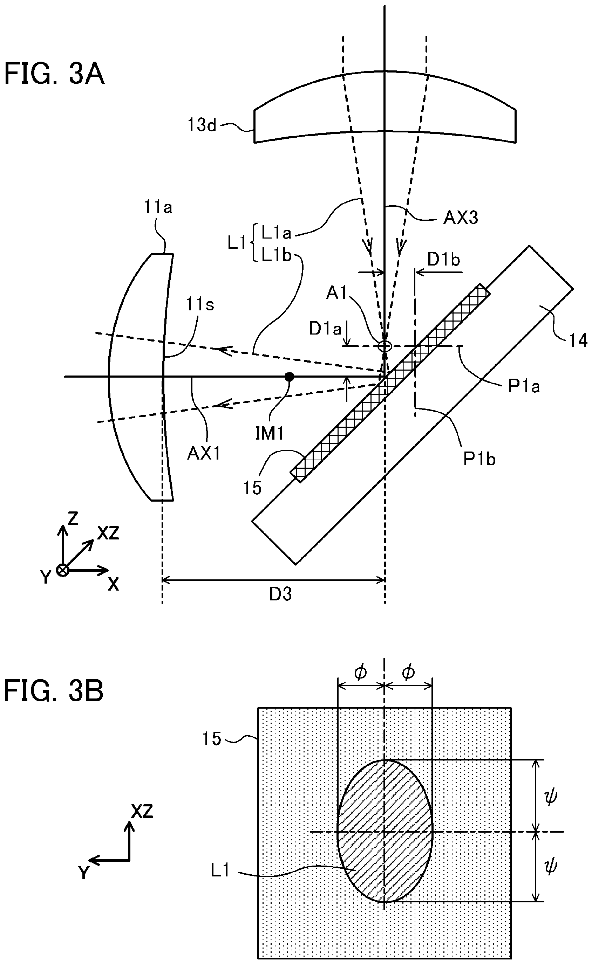

Next, with reference to FIG. 3, a modified example of a positional relationship between the first reflective surface 15 of the first reflective member 14, the first plane P1a, and the first optical system 11 will be described below.

FIG. 3A illustrates an enlarged view illustrating the vicinity of the first reflective member 14 of the optical apparatus 2. In FIG. 3A, only the lens 11a, which is disposed at a position closest to the first plane P1a, among the optical members (the lens, the mirror, or the like) included in the first optical system 11 is illustrated, instead of the first optical system 11. In the below described description, a surface of the lens 11a facing toward the first plane P1a is hereinafter referred to as a surface 11s. Note that the lens 11a is not limited to a lens, but may be a mirror.

Moreover, only the lens 13d, which is disposed at a position closest to the first plane P1a, among the optical members (the lens, the mirror, or the like) included in the third optical system 13 is illustrated, instead of the third optical system 13. Note that the lens 13d is not limited to a lens, but may be a mirror.

In the modified example illustrated in FIG. 3A, the first reflective surface 15 is disposed on the first optical path L1 reflected by the first reflective surface 15, and at a position that is away from the first optical system 11 toward the entrance side, namely, the light source 10 (see FIG. 1) side. Furthermore, the first reflective surface 15 is disposed at a position that is away toward the entrance side from a first intermediate position IM1 that is an intermediate position along the optical axis AX1 of the first optical system 11 between the surface 11s and the first plane P1a.

By disposing the first reflective surface 15 at this position, the first reflective surface 15 is closer to the first plane P1a that is optically conjugate to the third plane P3. Therefore, a moving distance of the second area A2 in the third plane P3 caused by changing the orientation of the first reflective surface 15 can be smaller.

FIG. 3B illustrates the first reflective surface 15 illustrated in FIG. 1 or FIG. 3A viewed from a direction along a normal line of the first reflective surface 15. FIG. 3B illustrates the first optical path L1 reflected by the first reflective surface 15 superimposed.

On the first reflective surface 15 that is disposed to be inclined with respect to the propagating direction of the first optical path L1 by about 45 degree, a shape of an area occupied by the first optical path L1 is generally an oval shape having a short radius ϕ in the Y direction and a long radius ψ in the XZ direction. Here, the long radius ψ is approximately (2)^(1/2) times of the short radius ϕ. Both of the short radius ϕ and the long radius ψ are assumed to be 1/e^2 half-width (a Gaussian half-width) as an example.

The light supplied from the light source 10 (see FIG. 1) is an intense light by which the workpiece W is vaporized (see FIG. 1), and thus, the light may damage or deteriorate the first reflective surface 15 when the first optical path L1 converges excessively on the first reflective surface 15. Therefore, the short radius ϕ and the long radius ψ may be kept being equal to or longer than a predetermined value to avoid excessive convergence of the first optical path L1 on the first reflective surface 15.

In both of the first example embodiment illustrated in FIG. 1 and the modified example illustrated in FIG. 3A, such a condition 2ϕ > d, namely, 2ϕ/d > 1 may be satisfied as an example, wherein d represents a distance from the first plane P1a to the first reflective surface 15 along the first optical path L1.

Here, the distance d corresponds to a distance D1a from the first plane P1a to the first reflective surface 15 on the optical axis AX3 of the third optical system 13 and a distance D1b from the first virtual image plane P1b to the first reflective surface 15 on the optical axis AX1 of the first optical system 11, illustrated in FIG. 3A. incidentally, in FIG. 1 and FIG. 3A, the first area R1 on the first plane P1a is assumed to be at a position that is away from the first reflective surface 15 toward the light source 10 side, however, the first area R1 may be at a position that is away from the first reflective surface 15 toward the first optical system 11 side. Therefore, the distance dia (d) may be not only a distance on the optical axis AX3 from the first reflective surface 15 on the light source 10 side, but also a distance on the optical axis AX1 from the first reflective surface 15 on the first optical system 11 side.

Incidentally, when the shape of the first optical path L1 on the first reflective surface 15 (the size occupied on the first reflective surface 15 by the light beam passing through the first optical path L1) is too large, it is necessary to enlarge the first reflective surface 15, and it is difficult to decrease a rotational movement speed of the first reflective surface 15 and to set the orientation of the first reflective surface with high accuracy. Thus, in order to avoid excessive enlargement of the first reflective surface 15, the distance d (D1a, D1b) and the short radius ϕ may satisfy such a condition that 333 > 2(p/d > 1.

When a distance from the first plane P1a to the surface 11s is represented by a distance c, wherein the surface 11s is a surface at the first plane P1a side of the optical member (the lens 11a), which is disposed at a position closest to the first plane P1a, among the optical members included in the first optical system 11, the distance c may be equal to or longer than 40 mm or equal to and shorter than 500 mm. Here, the distance c is a length based on the above-described distance D1a and a distance D3 from the surface to11s to the first reflective surface 15 along the first reflection optical path L1b, and c = D3 + D1a when the first area R1 is located at a position that is away from the first reflective surface 15 toward the light source 10 side, and c = D3 - D1a when the first area R1 is located at a position that is away from the first reflective surface 15 toward the first optical system 11 side.

When the distance c is shorter than 40 mm, there is a possibility that the first reflective surface 15 is damaged or deteriorated as described above. On the other hand, when the distance c is longer than 500 mm, the optical path length is too long and may be affected by air fluctuation, which may cause the position of the second area R2 to fluctuate (become unstable) on the third plane P3.

### (Modified Example of Position at which Second Reflective Member is disposed)

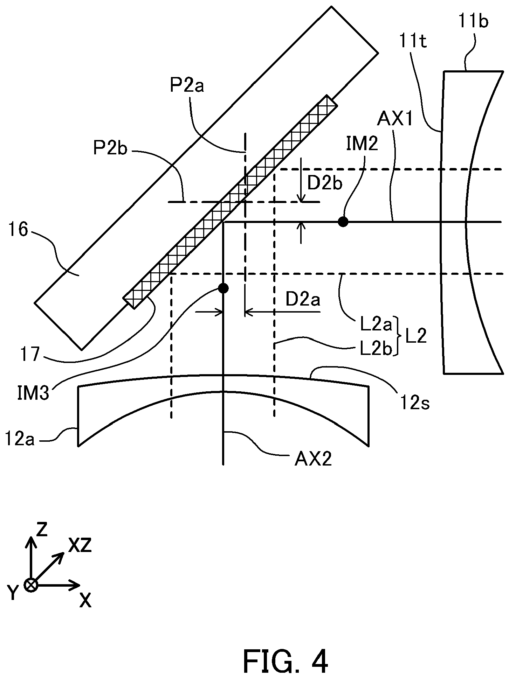

Next, with reference to FIG. 4, a modified example of a positional relationship between the second reflective surface 17 of the second reflective member 16, the second plane P2a, the first optical system 11, and the second optical system 12 will be described below.

FIG. 4 illustrates an enlarged view illustrating the vicinity of the second reflective member 16 of the optical apparatus 2. In FIG. 4, only the lens 11b, which is disposed at a position closest to the second plane P2a, among the optical members (the lens, the mirror, or the like) included in the first optical system 11 is illustrated, instead of the first optical system 11. In the below described description, a surface of the lens 11b facing toward the second plane P2a is hereinafter referred to as a surface 11t. Note that the lens 11b is not limited to a lens, but may be a mirror.

Moreover, in FIG. 4, only the lens 12a, which is disposed at a position closest to the second plane P2a, among the optical members (the lens, the mirror, or the like) included in the second optical system 12 is illustrated, instead of the second optical system 12. In the below described description, a surface of the lens 12a facing toward the second plane P2a is hereinafter referred to as a surface 12s. Note that the lens 12a is not limited to a lens, but may be a mirror.

A distance D2a is a distance from the second plane P2a to the second reflective surface 17 on the optical axis AX1 of the first optical system 11, and a distance D2b is a distance from the second virtual image plane P2b to the second reflective surface 17 on the optical axis AX2 of the second optical system 12.

Even in the modified example illustrated in FIG. 4, the second reflective surface 17 is disposed on the second optical path L2 reflected by the second reflective surface 17, and at a position between the first optical system 11 and the second optical system 12. Furthermore, the second reflective surface 17 is disposed at a position that is away toward the second plane P2a side from a second intermediate position IM2 that is an intermediate position along the optical axis AX1 of the first optical system 11 between the surface 11t and the second plane P2a. Furthermore, the second reflective surface 17 is disposed at a position that is away toward the second plane P2a side from a third intermediate position IM3 that is an intermediate position along the optical axis AX2 of the second optical system 12 between the surface 12s and the second plane P2a.

In other words, in the modified example illustrated in FIG. 4, the second reflective surface 17 of the second reflective member 16 is disposed at a position that is away toward the second plane P2a side from the second intermediate position IM2 and that is away toward the second plane P2a side from the third intermediate position IM3.

By disposing the second reflective surface 17 at this position, the second reflective surface 15 is closer to the second plane P2a that is the pupil plane of the third plane P3. Therefore, the change of the incident angle of the third optical path L3 relative to the third plane P3 caused by changing the orientations of the second reflective surfaces 17 can be smaller.

### (Magnification Factor of Optical System)

In the above-described optical apparatus 2, a combined optical system including the first optical system 11 and the second optical system 12 may have a reduction magnification factor. Namely, the first optical system 11 and the second optical system 12 may reduce an image of the first area R1 on the first plane P1a to form a reduced image in the second area R2 on the third plane P3.

When the combined optical system including the first optical system 11 and the second optical system 12 is a reduction system, it is preferable to increase the short radius ϕ and the long radius ψ of the first optical path L1 on the first reflective surface 15, and to prevent the damage or the deterioration of the first reflective surface 15.

As one example, β that represents an absolute value of the magnification factor (a lateral magnification factor) of the combined optical system including the first optical system 11 and the second optical system 12 may be equal to or larger than 0.1 times and equal to or smaller than 1 times. Note that the above-described value of the magnification factor may be a positive value or a negative value.

Incidentally, when the absolute value β of the magnification factor is smaller than 0.1 times, a size of the first reflective surface 15 becomes larger and an angle position of the first reflective surface 15 becomes more difficult to control because high accuracy is required for the angle position.

Moreover, in the above-described optical apparatus 2, a combined optical system including the third optical system 13 and the first optical system 11 may have an enlargement magnification factor. Namely, the third optical system 13 and the first optical system 11 may make a diameter of the second optical path L2 on the second plane P2a be larger the diameter of the optical path L0 of the light entering the third optical system 13.

This allows the short radius and the long radius of the second optical path L2 on the second reflective surface 17 to be increased, thereby preventing the damage or the deterioration of the first reflective surface 17. Moreover, a numeral aperture (NA) of the third optical path L3, which passes through the second optical system 12 to be condensed on the third plane P3, can be increased, and the fine hole or groove can be formed (processed) on the workpiece W (see FIG. 1).

As one example, an absolute value of the magnification factor (a lateral magnification factor) of the combined optical system including the first optical system 11 and the third optical system 13 may be equal to or larger than 1 times and equal to or smaller than 20 times. The above-described magnification factor may be a positive value or a negative value. When the magnification factor of the combined optical system including the first optical system 11 and the third optical system 13 is larger than 20 times, there is a possibility that the diameter of the second optical path L2 on the second plane P2a becomes excessively large and the light is not capable of passing through the second optical system 12, resulting in light loss.

### (Configuration of Third Optical System)

As illustrated in FIG. 1, the third optical system 13 includes the shaping optical system 13e. The shaping optical system 13e acts on the light passing through the optical path L0 to change an intensity distribution of the light condensed on the first plane P1a.

As one example, the shaping optical system 13e includes a phase-type diffraction grating, and divides the optical path L0 passing through the shaping optical system 13e into a plurality of optical paths propagating directions of which are slightly different from each other. As a result, a plurality of first areas R1, which are the light-condensed areas, are formed on the first plane P1a.The plurality of light-condensed areas are not limited to areas that are separated from each other, and the plurality of light-condensed areas may be partially overlapped with each other.

The shaping optical system 13e may be a light-shielding mask disposed in the vicinity of the first plane P1a.In this case, the intensity distribution of the light condensed on the first plane P1a can be controlled to be a distribution imitating a shape of a transmittance distribution of the transmissive part of the light-shielding mask.

The shaping optical system 13e may be provided to be attachable to and detachable from or interchangeable relative to the third optical system 13 by a non-illustrated replacement mechanism.

Alternatively, the third optical system 13 may not have the shaping optical system 13e.

In FIG. 1, the third optical system 13 is assumed to be a zoom optical system, however, the third optical system 13 may not be the zoom optical system and may be an optical system with a fixed focal length.

In the below-described description, a numerical aperture of the light (the optical path L1) condensed on the first plane P1a by the third optical system 13 is referred to as a "first numerical aperture". Moreover, the absolute value of the image-forming magnification factor (the lateral magnification factor) from the first plane P1a to the third plane by the first optical system 11 and the second optical system 12 is represented by β, as described above.

In this case, as one example, the first numerical aperture is equal to or smaller than 1/2 times of a numerical aperture of the first optical system 11 at the first plane P1a side and is equal to or smaller than β/2 times of a numerical aperture of the second optical system 12 at the third plane P3 side.

When the first numerical aperture satisfies the above-described conditions, the position of the optical path of the light in the first optical system 11 and the second optical system 12 can be efficiently displaced in response to the change of the orientation (the angle) of the first reflective surface 15. As a result, the incident angle of the third optical path L3 relative to the third plane P3 can be efficiently changed. Conversely, when the first numerical aperture does not satisfy the above-described conditions, the significant change of the direction (the angle) of the first reflective surface 15 prevents a part of the light reflected by the first reflective surface 15 from passing through the first optical system 11 or the second optical system 12. This results in a decrease of the amount of the light reaching the third plane P3.

The number of lenses included in the first optical system 11, the second optical system 12, and the third optical system 13 is not limited to the above-described number, but each system may have any number of lenses. Alternatively, at least one of the first optical system 11, the second optical system 12, and the third optical system 13 may include a reflective optical member such as a mirror or a prism.

Moreover, the third optical system 13 may not be an optical system including the lens, the mirror, and so on, and for example, it may be a light guiding member such as an optical fiber. In this case, the above-described first area R1 is formed in the vicinity of an exit end of the light guide member. The optical apparatus 2 may not include the third optical system 13.

### (Modified Example of Configuration of Second Optical System)

The focal length of the second optical system 12 may be changeable. As one example, the second optical system 12 may be a zoom optical system similar to the above-described third optical system 13. Alternatively, a part or all of the second optical system 12 may be interchangeable and the focal length thereof may be changed by the interchange. In this case, the control unit 30 may change the control of the orientations of the first reflective surface 15 and the second reflective surface 17 based on information related to the focal length of the second optical system 12.

Moreover, the optical apparatus 2 may not include the second optical system 12 as one example. For example, the optical apparatus 2 that does not include the second optical system 12 and various second optical systems 12 having different focal lengths or numerical apertures may be manufactured and sold separately. In this case, a user may use the optical apparatus 2 that does not include the second optical system 12 in combination with the second optical system 12 that has the desired characteristic.

### (Optical Apparatus in Second Example Embodiment)

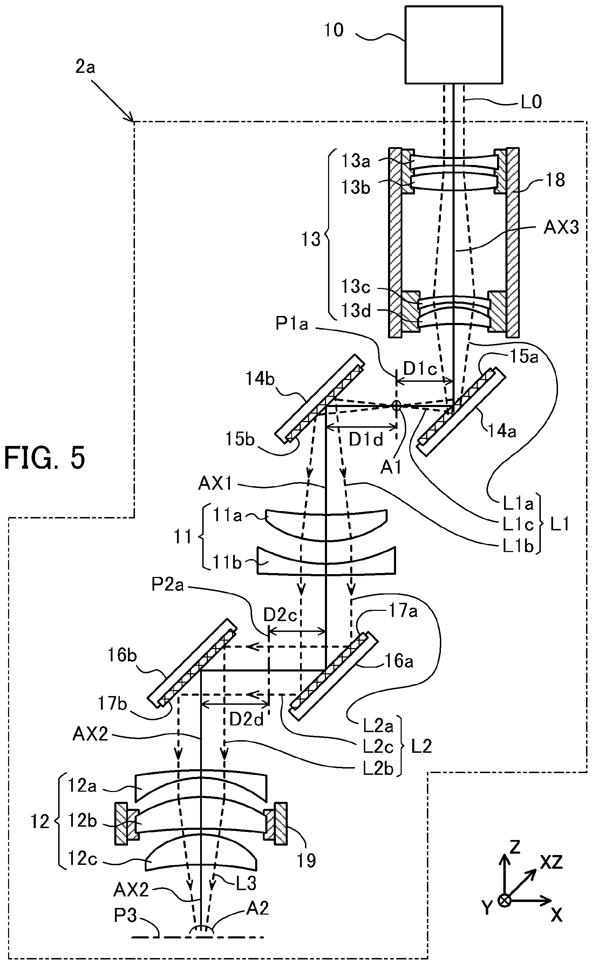

FIG. 5 illustrates a schematic diagram illustrating a configuration of an optical apparatus 2a in a second example embodiment. An area surrounded by two dotted line in FIG. 5 illustrates the configuration of the optical apparatus 2a. Much of the configuration of the optical apparatus 2a in the second example embodiment is common to that of the optical apparatus 2 in the first example embodiment described above, and thus, a description of the common configuration is omitted by assigning the same reference number thereto.

In the optical apparatus 2a in the second example embodiment, the configurations of the first optical system 11, the second optical system 12, and the third optical system 13 are the same as those of the optical apparatus 2 in the first example embodiment described above or the modified example thereof.

Note that the optical apparatus 2a in the second example embodiment also has the control unit 30 and the control signals S2 to S3, however, these configurations are omitted to avoid complication of the drawing in FIG. 5.

In the optical apparatus 2a in the second example embodiment, two first reflective members 14a and 14b are disposed along the first optical path L1 between the third optical system 13 and the first optical system 11. Moreover, two second reflective members 16a and 16b are disposed along the second optical path L2 between the first optical system 11 and the second optical system 12. In the below described description, a part of the first optical path L1 between the two first reflective members 14a and 14b is referred to as a first intermediate optical path L1c, and a part of the second optical path L2 between the two second reflective members 16a and 16b is referred to as a second intermediate optical path L2c.

Each of the first reflective members 14a and 14b has the same configuration as the first reflective member 14 in the first example embodiment described above, and the first reflective member 14a has a first reflective surface 15a and the first reflective member 14b has a first reflective surface 15b. The first reflective surface 15a is held so that an orientation of the first reflective surface 15a is swingable relative to the first reflective member 14a. The first reflective surface 15b is held so that an orientation of the first reflective surface 15b is swingable relative to the first reflective member 14b. The orientations (angles) of the first reflective surface 15a and the first reflective surface 15b are controlled by a control signal (not illustrated) from the control unit 30 (see FIG. 1).

Each of the first reflective surfaces 15a and 15b may be a reflective surface that is swingable within a predetermined angular range around two rotational axis, as with the first reflective surface 15 in the first example embodiment described above. Alternatively, the first reflective surface 15a may be a reflective surface that is swingable within a predetermined angular range around the Y direction, for example, and the first reflective surface 15b may be a reflective surface that is swingable within a predetermined angle range around a direction intersecting with the Y direction, for example, such as the XZ direction.

When each of the first reflective surface 15a and the first reflective surface 15b is the reflective surface that is swingable around only one center of rotation, the configurations of the first reflective members 14a and 14b can be simplified. In addition, rotational speeds of the first reflective surfaces 15a and 15b can be increased.

In the optical apparatus 2a in the second example embodiment, the two first reflective members 14a and 14b may be disposed at a position that is away from the first plane P1a toward the third optical system 13 and a position that is away from the first plane P1a toward the first optical system 11 along the first optical path L1, respectively. Namely, the two first reflective members 14a and 14b may be disposed in front of and behind the first plane P1a, respectively. In this case, a distance D1c to the first reflective surface 15a of the first reflective member 14a and a distance D1d to the first reflective surface 15b of the first reflective member 14b from the first plane P1a, which is optically conjugate to the third plane P3, can be reduced to be short. Therefore, the moving distance of the second area A2 in the third plane P3 caused by changing the orientations of the first reflective surfaces 15a and 15b can be smaller.

Incidentally, when the movement of the second area A2 caused by the change of the orientations of the first reflective surfaces 15a and 15b is allowed, both of the first reflective members 14a and 14b may be disposed at the position that is away toward the third optical system 13 or the position that is away toward the first optical system 11 from the first plane P1a.

In this case, the movement of the second area A2 relative to the workpiece W due to the change of orientations of the first reflective surfaces 15a and 15b may be corrected by moving the sample stage 20 to move the workpiece W.

Each of the second reflective members 16a and 16b has the same configuration as the second reflective member 16 in the first example embodiment described above, and the second reflective member 16a has a second reflective surface 17a and the second reflective member 16b has a second reflective surface 17b. The second reflective surface 17a is held so that an orientation of the second reflective surface 17a is swingable relative to the second reflective member 16a. The second reflective surface 17b is held so that an orientation of the second reflective surface 17b is swingable relative to the second reflective member 16b. The orientations (angles) of the second reflective surface 17a and the second reflective surface 17b are controlled by a control signal (not illustrated) from the control unit 30 (see FIG. 1).

Each of the second reflective surfaces 17a and 17b may be a reflective surface that is swingable within a predetermined angular range around two rotational axis, as with the second reflective surface 17 in the first example embodiment described above. Alternatively, the second reflective surface 17a may be a reflective surface that is swingable within a predetermined angular range around the Y direction, for example, and the second reflective surface 17b may be a reflective surface that is swingable within a predetermined angle range around a direction intersecting with the Y direction, for example, such as the XZ direction.

When each of the second reflective surface 17a and the second reflective surface 17b is the reflective surface that is swingable around only one center of rotation, the configurations of the second reflective members 16a and 16b can be simplified. In addition, rotational speeds of the second reflective surfaces 17a and 17b can be increased.

In the optical apparatus 2a in the second example embodiment, the two second reflective members 16a and 16b may be disposed at a position that is away from the second plane P2a toward the first optical system 11 and a position that is away from the second plane P2a toward the second optical system 12 along the second optical path L2, respectively. Namely, the two second reflective members 16a and 16b may be disposed in front of and behind the second plane P2a, respectively.

In this case, a distance D2c to the second reflective surface 16a of the second reflective member 16a and a distance D2d to the second reflective surface 17b of the second reflective member 16b from the second plane P2a, which is the pupil plane relative to the third plane P3 that is the object plane, can be reduced to be short. Therefore, the change of the incident angle of the third optical path L3 relative to the third plane P3 caused by changing the orientations of the second reflective surfaces 17a and 17b can be smaller.

Incidentally, when the change of the incident angle of the third optical path L3 relative to the third plane P3 caused by changing the orientations of the second reflective surfaces 17a and 17b is allowed, both of the second reflective members 16a and 16b may be disposed at the position that is away toward the first optical system 11 or the position that is away toward the second optical system 12 from the second plane P2a.

In this case, the change of the incident angle of the third optical path L3 relative to the irradiation target surface WS of the workpiece W caused by changing the orientations of the second reflective surfaces 17a and 17b may be corrected by tilting the sample stage 20.

Even in the optical apparatus 2a in the second example embodiment described above, the same modified examples as in the various modified examples in the optical apparatus 2 in the first example embodiment described above may be applied.

Moreover, the processing apparatus 1 in the first example embodiment described above may include the optical apparatus 2a in the second example embodiment described above instead of the optical apparatus 2.

### (Processing Apparatus in Third Example Embodiment)

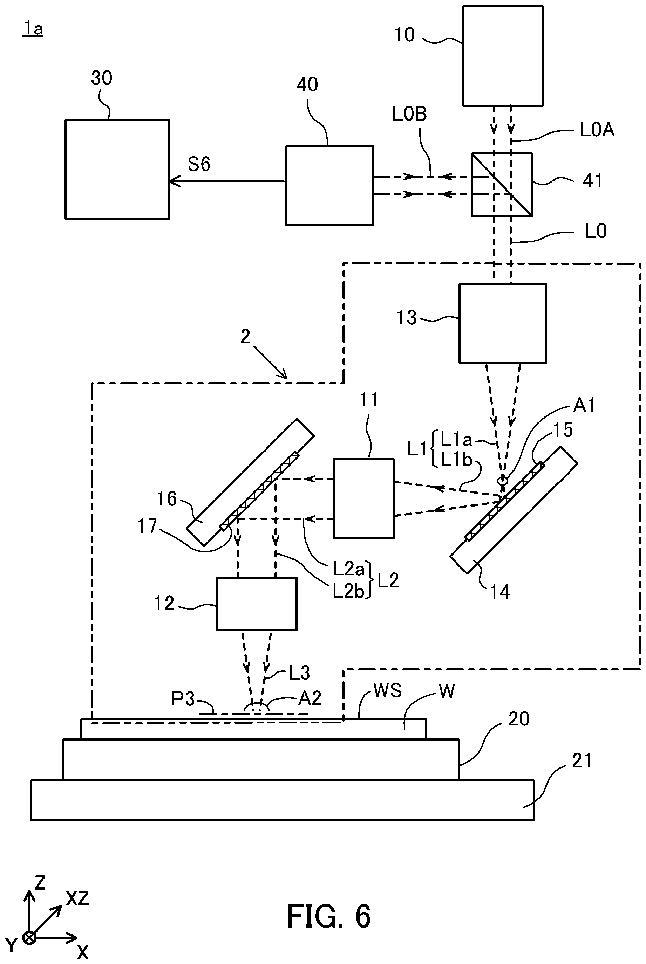

Next, with reference to FIG. 6, a processing apparatus 1a in a third example embodiment will be described. Much of the configuration of the processing apparatus 1a in the third example embodiment is common to that of the processing apparatus 1 in the first example embodiment described above, and thus, a description of the common configuration is omitted by assigning the same reference number thereto.

FIG. 6 illustrates a schematic diagram illustrating a configuration of the processing apparatus 1 in the third example embodiment. The optical apparatus 2 illustrated by surrounding it by two dotted line in FIG. 6 is the same as the optical apparatus 2 illustrated in FIG. 1. However, in FIG. 6, the configuration thereof is illustrated in a simplified manner. Moreover, the processing apparatus 1a in the third example embodiment also has the encoder 23, the control signals S1 to S4, and the position signal S5 (all illustrated in FIG. 1), however, these configurations are omitted to avoid complication of the drawing in FIG. 6.

The processing apparatus 1a in the third example embodiment further includes a measurement apparatus 40 that is configured to allow measurement light to enter the optical apparatus 2 to irradiate the workpiece W with the measurement light and to optically receive the measurement light from the workpiece W through the optical apparatus 2, in addition to the configuration of the processing apparatus 1 in the first example embodiment described above As illustrated in FIG. 6, as one example, a dividing element 41 such as a dichroic prism is disposed between the light source 10 supplying the light for processing the workpiece W and the third optical system 13 of the optical apparatus 2.

Processing light, which is the light emitted from the light source 10, enters the dividing element 41 through an optical path L0A. The processing light passes through the dividing element 41 and enters the optical apparatus 2 through the optical path L0 as in the processing apparatus 1 in the first example embodiment described above, the workpiece W is irradiated with it.

On the other hand, the measurement light, which is light emitted from the measurement apparatus 40, passes through an optical path L0B and enters the dividing element 41. The measurement light is light having a wavelength different from that of the processing light. The measured light is reflected by the dividing element 41 and enters the optical apparatus 2 through the optical path L0. By means of the optical apparatus 2, the measurement light enters the workpiece W through an optical path that is almost the same as that of the processing light. The measurement light is reflected by the workpiece W, passes through the optical apparatus 2 in the order of the second optical system 12, the first optical system 11, the third optical system 13 and so on, and returns to the dividing element 41. Then, the measurement light is reflected by the dividing element 41, passes through the optical path L0B to enter the measurement apparatus 40, and is optically received by the measurement apparatus 40.

For example, an interferometer may be used as the measurement apparatus 40. This may be used to, for example, measure a distance between the processing apparatus 1A and the workpiece W based on the position of the second optical system. Moreover, an interferometer having a two-dimensional resolution in the in-plane direction perpendicular to the optical path L0B of the measurement light may be used as the measurement apparatus. This may be used to measure a three-dimensional shape of the workpiece W and so on.

Alternatively, an imaging apparatus having a two-dimensional resolution may be used as the measurement apparatus 40, or an imaging apparatus having, for example, a Nipkow disk (a Nipkow filter) and having a three-dimensional resolution may be used.

The measurement apparatus 40 transmits information related to a measured result of the workpiece W to the control unit 30 as a measurement signal S6. The control unit 30 transmits, based on the measurement signal S6 from the measurement apparatus 40, the position signal S5 from the encoder 23, and so on, the above-described control signals S1 to S4 to the light source 10, the first reflective member 14, the second reflective member 16, and the sample stage 20, respectively. By this, the workpiece W can be processed more appropriately based on the measured result of the workpiece W.

Note that the processing apparatus 1a in the third example embodiment may include the optical apparatus 2a in the second example embodiment or the optical apparatus in the above-described modified examples thereof, instead of the optical apparatus 2 in the first example embodiment.

Moreover, the processing apparatus 1 or 1a of each of the example embodiments described above are not limited to processing apparatuses for processing the workpiece W, but may be applied to a light irradiating apparatus that is configured to irradiate an irradiation target object with light.

### (Effect of Optical Apparatus in each Example Embodiment and Modified Example)

(1) The optical apparatuses 2 and 2a in the first example embodiment, the second example embodiment, and the modified example described above include, from one viewpoint, the first optical system 11 configured to guide the light from the first area R1 on the first plane P1a to the second plane P2a, the second plane P2a is the pupil plane of the first optical system 11 relative to the first plane P1a; and the second optical system 12 disposed between the second plane P2a and the third plane P#, the second plane P2a is the pupil plane of the second optical system 12 relative to the third plane P3. Furthermore, they include: the first reflective member 14 that is disposed on the first optical path L1 at the entrance side (at the light source 10 side) of the first optical system 11 and that has the first reflective surface 15 that is swingable; and the second reflective member 16 that is disposed on the second optical path L2 between the first optical system 11 and the second optical system 12 and that has the second reflective surface 17 that is swingable.
   This configuration allows the position of the second area A2 on the third plane P3 to be changed by the orientation of the second reflective surface 17 and the incident angle of the third optical path L3 entering the second area on the third plane P3 to be changed by the orientation of the first reflective surface 15. This allows the orientations of the first reflective surface 15 and the second reflective surface 17 to be separately controlled, namely, the second reflective surface 17 is mainly used for controlling the position of the second area A2 and the first reflective surface 15 is mainly used for controlling the incident angle of the third optical path L3 entering the second area A2. Therefore, the orientations of the first reflective surface 15 and the second reflective surface 17 can be easily controlled and a control speed can be increased.
(2) The first reflective surface may be disposed at the position that is away from the first intermediate position IM1 toward the entrance side along the first optical path L1, the first intermediate position IM1 is the intermediate position between the first plane P1a and the optical member (the lens 11a) disposed at the position closest to the first plane P1a among the optical members included in the first optical system 11. In this configuration, the displacement of the position of the second area A2 when the orientation of the first reflective surface 15 is changed is kept smaller.
(3) The second reflective surface 17 may be disposed at the position that is away from the second intermediate position IM2 toward the second plane P2a side and that is away from the third intermediate position IM3 toward the second plane P2a side along the second optical path L2, the second intermediate position IM2 is the intermediate position between the second plane P2a and the optical member (the lens 11b) disposed at the position closest to the second plane P2a among the optical members included in the first optical system 11, the third intermediate position IM3 is the intermediate position between the second plane P2a and the optical member (the lens 12a) disposed at the position closest to the second plane P2a among the optical members included in the second optical system 12. In this configuration, the change of the incident angle of the third optical path L3 entering the second area R2 when the orientation of the second reflective surface 17 is changed is kept smaller.
(4) It is possible to avoid the excessive convergence of the first optical path L1 on the first reflective surface 15 by satisfying the condition of 2ϕ / d > 1, wherein ϕ represents the short radius of the area occupied by the first optical path L1 on the first reflective surface 15, d represents the distance from the first plane P1a to the first reflective surface 15 along the first optical path L1. Thus, it is possible to prevent the damage or the deterioration of the first reflective surface 15.
(5) The optical apparatuses 2 and 2a in the first example embodiment, the second example embodiment and the modified example described above include, from another viewpoint, the first reflective member 14 having the first reflective surface 15 that is swingable, the light from the light source 10 entering the first reflective member 14; an intermediate optical system (the first optical system 11) which the light from the first reflective member 14 enters; the second reflective member 16 having the second reflective surface 17 that is swingable, the light from the intermediate optical system (the first optical system 11) entering the second reflective member 16; and an objective optical system (the second optical system 12) configured to condenses the light from the second reflective member 16 on the workpiece W. moreover, they change the angle of the light, which propagates from the objective optical system (the second optical system 12) to the workpiece W, relative to the workpiece W by swinging the first reflective surface 15, and change the irradiation position of the light from the objective optical system (the second optical system 12), with which the workpiece W is irradiated, by swinging the second reflective surface 17.
   This configuration allows the angle of the light propagating toward the workpiece W to be changed by the orientation of the first reflective surface 15, and the irradiation position of the light with which the workpiece W is irradiated to be changed by the orientation of the second reflective surface 17.
(6) The optical apparatuses 2 and 2a in the first example embodiment, the second example embodiment, and the modified example described above are, from another viewpoint, the optical apparatuses 2 and 2a configured to make the light from the light source 10 enter the objective optical system (the second optical system 12), the optical apparatuses 2 and 2a include: the first reflective member 14 having the first reflective surface 15 that is swingable; the intermediate optical system (the first optical system 11) which the light from the first reflective member 14 enters; and the second reflective member 16 having the second reflective surface 17 that is swingable, the light from the intermediate optical system (the first optical system 11) entering the second reflective member 16. Furthermore, the intermediate optical system (the first optical system 11) is configured to guide the light from the first area R1 on the first plane P1a to the second plane P2a, the second plane P2a being the pupil plane of the intermediate optical system relative to the first plane P1a, the objective optical system (the second optical system 12) is disposed between the second plane P2a and the third plane P3, the second plane P2a being the pupil plane of the objective optical system relative to the third plane (P3).
   This configuration allows the position of the second area A2 on the third plane P3 to be changed by the orientation of the second reflective surface 17 and the incident angle of the third optical path L3 entering the second area on the third plane P3 to be changed by the orientation of the first reflective surface 15. This allows the orientations of the first reflective surface 15 and the second reflective surface 17 to be separately controlled, namely, the second reflective surface 17 is mainly used for controlling the position of the second area A2 and the first reflective surface 15 is mainly used for controlling the incident angle of the third optical path L3 entering the second area A2. Therefore, the orientations of the first reflective surface 15 and the second reflective surface 17 can be easily controlled and a control speed can be increased.
(7) The processing apparatuses 1 and 1a in the first example embodiment, the third example embodiment, and the modified example described above are the processing apparatuses configured to process the workpiece W by the light from the light source 10, the processing apparatuses include any of the optical apparatuses 2 and 2a from (1) to (6) which the light from the light source 10 enters. Thus, the orientations of the first reflective surface 15 and the second reflective surface 17 can be controlled easily, and it is possible to realize a processing apparatus with improved control speed of the first reflective surface 15 and the second reflective surface 17.

The present invention is not limited to the above-described content. Other possible aspect within a scope of a technical concept of the present invention is also included within the scope of the present invention. The present example embodiment may combine all or a part of the above-described aspects.

### Description of Reference Codes

- 1, 1a:: processing apparatus
- 2, 2a:: optical apparatus
- 10:: light source
- 11:: first optical system
- 12:: second optical system
- 13:: third optical system
- P1a, P1b:: first plane
- P2a, P2b:: second plane
- P3:: third plane
- 14:: first reflective member
- 15:: first reflective surface
- 16:: second reflective member
- 17:: second reflective surface
- 19:: focal position change member
- 20:: sample stage
- 21:: guide
- 30:: control unit
- W:: workpiece
- WS:: irradiation target surface

## Claims

1. An optical apparatus comprising:
a first optical system configured to guide light from a first area on a first plane to a second plane, the second plane being a pupil plane of the first optical system relative to the first plane;
a second optical system disposed between the second plane and a third plane, the second plane being a pupil plane of the second optical system relative to the third plane;
a first reflective member that is disposed on a first optical path at an entrance side of the first optical system and that has a first reflective surface that is swingable; and
a second reflective member that is disposed on a second optical path between the first optical system and the second optical system and that has a second reflective surface that is swingable.

2. The optical apparatus according to claim 1, wherein
the first optical system and the second optical system form an image of the first area in a second area on the third plane.

3. The optical apparatus according to claim 1 or 2, wherein
the first reflective surface is disposed at a position that is away from a first intermediate position toward the entrance side along the first optical path,
the first intermediate position is an intermediate position between the first plane and an optical member disposed at a position closest to the first plane among optical members included in the first optical system.

4. The optical apparatus according to any one of claims 1 to 3, wherein
the second reflective surface is disposed at a position that is away from a second intermediate position toward the second plane side and that is away from a third intermediate position toward the second plane side along the second optical path,
the second intermediate position is an intermediate position between the second plane and an optical member disposed at a position closest to the second plane among optical members included in the first optical system,
the third intermediate position is an intermediate position between the second plane and an optical member disposed at a position closest to the second plane among optical members included in the second optical system.

5. The optical apparatus according to any one of claims 1 to 4, wherein
the optical apparatus satisfies a condition of 2ϕ / d > 1,
ϕ represents a short radius of an area occupied by the first optical path on the first reflective surface,
d represents a distance from the first plane to the first reflective surface along the first optical path.

6. The optical apparatus according to claim 5, wherein
the optical apparatus satisfies a condition of 333 > 2ϕ / d > 1.

7. The optical apparatus according to any one of claims 1 to 6, wherein
a distance from the first plane to an optical member disposed at a position closest to the first plane among optical members included in the first optical system is equal to or longer than 40mm and equal to or shorter than 500mm.

8. The optical apparatus according to any one of claims 1 to 7, wherein
a combined optical system including the first optical system and the second optical system has a reduction magnification factor.

9. The optical apparatus according to any one of claims 1 to 7, wherein
an absolute value of a magnification factor of a combined optical system including the first optical system and the second optical system is equal to or larger than 0.1 and equal to or smaller than 1.

10. The optical apparatus according to any one of claims 1 to 9, wherein
the optical apparatus further comprises a third optical system configured to condense light from a light source at the first area on the first plane.

11. The optical apparatus according to claim 10, wherein
a combined optical system including the first optical system and the third optical system has an enlargement magnification factor.

12. The optical apparatus according to claim 10, wherein
an absolute value of a magnification factor of a combined optical system including the first optical system and the third optical system is equal to or larger than 1 and equal to or smaller than 20.

13. The optical apparatus according to any one of claims 10 to 12, wherein
the third optical system includes a zoom optical system configured to change a numerical aperture of the light condensed on the first plane.

14. The optical apparatus according to any one of claims 10 to 13, wherein
the third optical system has a shaping optical system configured to change an intensity distribution of the light condensed on the first plane.

15. The optical apparatus according to any one of claims 10 to 14, wherein
a numerical aperture of the light condensed on the first plane by the third optical system is equal to or smaller than 1/2 times of a numerical aperture of the first optical system at the first plane side and is equal to or smaller than β/2 times of a numerical aperture of the second optical system at the third plane side,
β represents an absolute value of a magnification factor of forming the image of the first plane on the third plane by the first optical system and the second optical system.

16. The optical apparatus according to any one of claims 1 to 15, wherein
two first reflective member including the first reflective member are disposed along the first optical path.

17. The optical apparatus according to claim 16, wherein
the two first reflective member are disposed so that the first plane is therebetween along the first optical path.

18. The optical apparatus according to any one of claims 1 to 17, wherein
two second reflective member including the second reflective member are disposed along the second optical path.

19. The optical apparatus according to claim 18, wherein
the two second reflective member are disposed so that the first plane is therebetween along the second optical path.

20. The optical apparatus according to any one of claims 1 to 19, wherein
the first optical system or the second optical system includes a focal position change member configured to move a position of the third plane in a direction along an optical axis of the second optical system.

21. The optical apparatus according to any one of claims 1 to 20, wherein
the optical apparatus further comprises a controller configured to control orientations of the first reflective surface and the second reflective surface.

22. The optical apparatus according to claim 21, wherein
the controller is configured to control the orientation of the first reflective surface so as to change a propagating direction of the light propagating from the second optical system to the third plane.

23. The optical apparatus according to claim 21 or 22, wherein
the controller is configured to control the orientation of the second reflective surface so as to change a position of the light reaching the third plane from the second optical system.

24. The optical apparatus according to any one of claims 21 to 23, wherein
a focal distance of the second optical system is changeable,
the controller is configured to change a control of the orientations of the first reflective surface and the second reflective surface based on information related to the focal distance of the second optical system.

25. An optical apparatus comprising:
a first reflective member having a first reflective surface that is swingable, light from a light source entering the first reflective member;
an intermediate optical system which light from the first reflective member enters;
a second reflective member having a second reflective surface that is swingable, light from the intermediate optical system entering the second reflective member; and
an objective optical system configured to condenses light from the second reflective member on a workpiece,
an angle of light, which propagates from the objective optical system to the workpiece, relative to the workpiece being changed by swinging the first reflective surface,
an irradiation position of the light from the objective optical system, with which the workpiece is irradiated, being changed by swinging the second reflective surface.

26. An optical apparatus configured to make light from a light source enter an objective optical system,
the optical system comprises:
a first reflective member having a first reflective surface that is swingable;
an intermediate optical system which light from the first reflective member enters; and
a second reflective member having a second reflective surface that is swingable, light from the intermediate optical system entering the second reflective member,
the intermediate optical system is configured to guide light from a first area on a first plane to a second plane, the second plane being a pupil plane of the intermediate optical system relative to the first plane,
the objective optical system is disposed between the second plane and a third plane, the second plane being a pupil plane of the objective optical system relative to the third plane.

27. The optical system according to claim 26, wherein
the intermediate optical system and the objective optical system form an image of the first area at a second area on the third plane.

28. A processing apparatus configured to process a workpiece by light from a light source, wherein
the processing apparatus comprises the optical system according to any one of claims 1 to 27, the light from the light source enters the optical system.

29. The processing apparatus according to claim 28, wherein
the processing apparatus further comprises a measurement apparatus that is configured to make measurement light enter the optical system to irradiate the workpiece with the measurement light and that is configured to optically receive the measurement light from the workpiece through the optical system.
